# EUROPEAN PATENT SPECIFICATION

(11) **EP 0 346 944 B1**
(45) Date of publication and mention of the grant of the patent: **03.04.1996**
(21) Application number: 89114332.3
(22) Date of filing: 18.02.1983
(51) Int. Cl.: B32B 27/32, B65D 75/00

(54) **Polymeric composition of matter, oriented polymeric films and shrink bags made therefrom**
Polymermaterialzusammensetzung, orientierte Polymerfilme und daraus hergestellte schrumpffähige Beutel
Composition de matière polymère, films polymères orientés et sacs rétrécissables fabriqués à partir de ceux-ci

(30) Priority: 26.04.1982 US 371781
(43) Date of publication of application: 20.12.1989
(62) Divisional of application: 83300831.1
(73) Proprietor: AMERICAN NATIONAL CAN COMPANY, Chicago, Illinois 60631 (US)
(72) Inventor: Newsome, David L., Neenah Wisconsin 54956 (US)
(74) Representative: MacGregor, Gordon

(56) References cited:
- EP-A- 0 032 027
- EP-A- 0 087 080
- GB-A- 2 097 324
- GB-A- 2 121 062
- US-A- 4 161 562

## Description

The present invention relates to a polymeric composition of matter, oriented polymeric films and shrink bags made therefrom.

Heat shrinkable polymer films have gained substantial acceptance for such uses as the packaging of meats. This description will for convenience refer to the film packaging of meat, but it is to be understood that films according to the invention are also suitable for packaging other products. Some films embodying this invention will normally be formed as heat shrinkable bags and supplied to the meat packer with one open end. They are to be closed and sealed after insertion of the meat. After the product is inserted, air will normally be evacuated, the open end of the bag closed, for instance by heat sealing or by applying a metal clip, and finally heat is applied, such as by hot water, to initiate shrinkage of the film about the meat.

In subsequent processing of the meat, the bag may be opened and the meat removed for further cutting of the meat into user cuts, for retail sale, for example, or for institutional use.

Successful shrink bags must satisfy a multiplicity of requirements imposed by both the bag producer and the bag user. Of primary importance to the bag user is the capability of the bag physically to survive intact the process of being filled, evacuated, sealed closed, and heat shrunk. The bag must also be strong enough to survive the handling involved in moving the packaged meat, which may weigh 100 pounds (45 kg) or more, along the distribution system to the next processor, or to the user. Thus, the bag must physically protect the meat.

It is also highly desirable to the bag user that the bag serve as a barrier against infusion of gaseous matter from the surrounding environment. Of particular importance is the exclusion of oxygen, since oxygen is well known to affect meat deleteriously.

The bag producer requires a product which can be produced competitively while meeting the performance requirements of the user. Thus the bag material should be readily extrudable, and susceptible to orientation, with sufficient leeway in process parameters as to allow for efficient film production. The process should also be susceptible of efficient extended production operations. In the orientation process, the film must be tough enough to withstand the necessary stretching. The orientation temperature should be a temperature which can be economically achieved by the producer, and which provides for use of economical shrink processes by the bag user.

Conventional shrink bags have generally been constructed with ethylene vinyl acetate copolymers (EVA). In some cases the bags contain a layer of a Saran (Registered Trade Mark) copolymer to serve as an oxygen barrier. Ethylene vinyl alcohol copolymer (EVOH) has also been suggested as the barrier layer.

Notwithstanding the advantages, shrink-bag packaging of meat is not without its difficulties, many of which are attributable to limitations in the film. As will be appreciated, the processes of stretching the film, and later shrinking it, expose the film to rather severe conditions, due to the nature of the operations.

It is especially important to appreciate that the film is particularly vulnerable to failure due to the relatively high temperatures to which it is exposed in the orientation and shrinking processes.

The film must be susceptible of orientation without distortion, or separation of the layers which are normally present in films of this nature. The film must be strong enough, at the orientation temperature, to withstand the stretching without the creation of holes or tears, and must not develop non-uniform zones of stretching.

In the case of blown tubular film, the film must be capable of supporting the stretching bubble during the orientation process. Finally, each one of the layers of a multilayer film should be susceptible of orientation without fracture, separation, or creation of holes therein.

In the packaging phase, the film must respond to heat rapidly enough for commercial practicality, and yet must not exhibit such a level of shrinkage as would cause the film to pull apart or delaminate under its own internal shrinkage forces. Shrink-related problems are seriously aggravated when a cut of meat includes protruding bones and/or significant cavities in its surface.

Where there are cavities in the meat, such as around the interior of a rib section, the redistribution of an area of the film adjacent the cavity places especially severe strains on the ability of the film to conform to the meat in the shrinking process while maintaining film continuity. All too commonly, the film may develop holes in the cavity area, thus breaching the physical and chemical protection which the packaging film should provide for the contained product.

EP-A-0 032 027 discloses a five-layer laminate comprising a first (core) layer of polyvinyl chloride-polyvinylidene chloride copolymer, two layers of EVA adjacent to the core layer, and two outer layers. There is no mention of linear LDPE nor of using amounts of PE other than 60% or 80% in the outer layers.

An object of this invention is to provide improved polymeric material and film structures for use in shrink bags well able to withstand production and shrink processes, so that bags made therefrom can withstand the shrink processes intact, especially when a packaged item such as meat, has a large-cavity in a surface thereof.

The present invention provides an oriented multiple layer polymeric film, consisting of a first barrier layer selected from polyvinyl chloride-polyvinylidene chloride copolymer, ethylene vinyl alcohol copolymer and a polymeric blend containing ethylene vinyl alcohol copolymer, second and third layers each adhered to a respective one of the opposite surfaces of the first layer, and fourth and fifth layers respectively adhered to surfaces of the second and third layers not adhered to the first layer, the fourth and fifth layers each being a blend of linear low density polyethylene (LLDPE) and ethylene vinyl acetate (EVA) and each of the second and third layers being an EVA, the fourth and fifth layers having the same composition and being composed of 10 to less than 20% LLDPE and the balance being EVA; the percentages quoted being by weight.

The invention also provides an oriented selected from polyvinyl chloride-polyvinylidene chloride copolymer, ethylene vinyl alcohol copolymer and a polymeric blend containing ethylene vinyl alcohol copolymer, second and third layers each adhered to a respective one of the opposite surfaces of the first layer, and fourth and fifth layers respectively adhered to surfaces of the second and third layers not adhered to the first layer, the fourth and fifth layers each being a blend of linear low density polyethylene (LLDPE) and ethylene vinyl acetate (EVA) and each of the second and third layers being an EVA, the fourth and fifth layers having different compositions, one of these layers being composed of 10 to less than 20% LLDPE, the balance being EVA, and the other of these layers being composed of more than 10 up to 90% LLDPE, the balance being EVA; the percentages quoted being by weight.

In the multiple layer films of the invention, the barrier layer is preferably either polyvinyl chloride-polyvinylidene chloride copolymer (Saran) or EVOH, or a polymeric blend containing EVOH.

In preferred films according to the invention, the overall composition of the film is 20% to 30% LLDPE.

The invention comprehends heat sealable shrink bags for utilization particularly in packaging of meat, which may have bony projections or large cavities, wherein the bags are made from oriented films according to the invention.

Preferred embodiments of the invention will now be described by way of non-limiting example in the following description, with reference to the accompanying drawings, in which:
FIGURE 1 is a plan view of a bag made according to the invention,
FIGURE 2 is a cross-section of the bag of FIGURE 1 taken on the line 2-2 of FIGURE 1,
FIGURE 3 is a cross-section similar to FIGURE 2, but showing a 5-layer bag structure instead of a 3-layer structure.

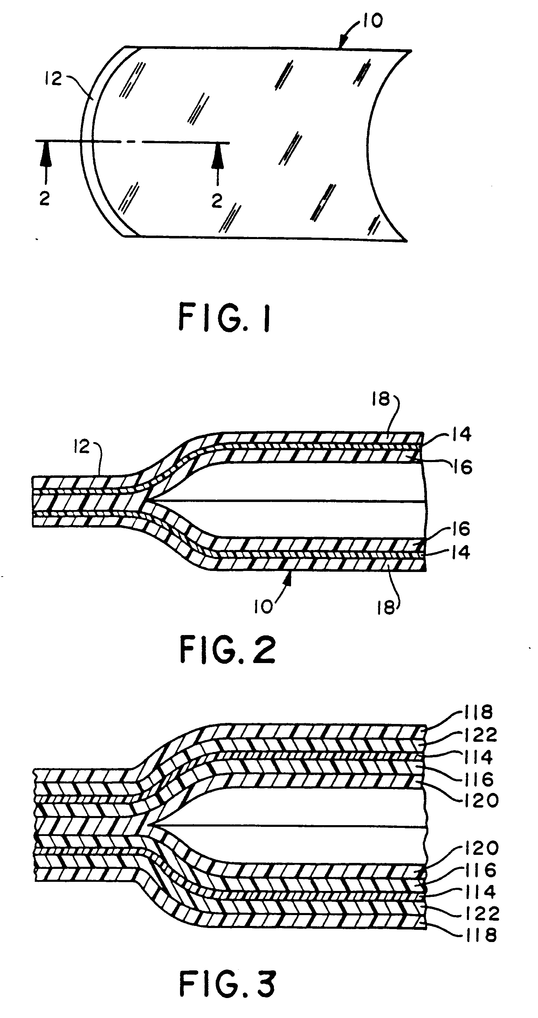

FIGURE 1 shows a bag 10 according to the invention. The empty bag shown is a collapsed, molecularly-oriented tube having a closing heat seal 12 across one end of the tube. The other end of the bag is left open for insertion of meat, and it is normally closed and sealed after the meat is put into the bag.

The cross-section of the bag in FIGURE 2 shows a typical structure where the bag is made from a three-layer coextruded plastics film (which is not according to the invention). Layer 14 is a barrier layer which minimizes the transmission of oxygen through the film. Preferred barrier layer materials are Saran, EVOH, and blends of EVOH. Layer 16 is the heat seal layer. Layer 18 is the outer bag layer and serves a primary function of protecting the package and its product from physical abuse.

In engineering the specifications for a specific film according to the invention, one deals with the following independent variables: barrier layer composition and thickness, the specific EVA, the specific LLDPE, the ratio of EVA/LLDPE in the sealant layer 16 and the exterior layer 18 and the thicknesses of layers 16 and 18, and the overall thickness of the film.

The overall thickness of films of this invention is nominally the same as the thickness of conventional films. Films are generally about 2.0 mils (0.05 mm) thick with a normal range of 1.5 to 3.0 mils (0.038 to 0.076 mm). Films thinner than 1.5 mil (0.038 mm) tend to be too weak to perform all required functions. Films thicker than 3.0 mils (0.076 mm) are unable to compete economically with thinner films.

LLDPE polymers suitable for use in this invention are those having a melt index (MI) of up to about 6. Preferred LLDPE polymers have an MI of 0.5 to 1.5. Among the preferred polymers are 2045 from Dow Chemical Company and llP from DuPont Company.

As used herein, the term melt index refers to the physical property determination described in ASTM-D1238.

Preferred EVA's are those having 6% to 12% vinyl acetate (VA) content and a melt index less than 1. While blend amounts are quoted herein in terms of weight percent, VA contents are in mole percent. Especially preferred EVA's have VA contents of 7% to 9% and melt indices of 0.2 to 0.8.

The amount of LLDPE in the blend is selected to provide the best balance of properties which maximizes the desirable benefits of each of the elements of the blend. The EVA provides high levels of adhesion to the barrier layer when the barrier layer is Saran or certain EVOH blends. EVA's having greater than about 85% ethylene also provide substantial structural strength to the film during the orientation process, and are especially beneficial for the orientation of tubular films, The LLDPE is highly desired for its capability of surviving intact the processes involved in shrinking and, in general, the striking ability of shrink bags to withstand the shrinking process correlates directly with increasing LLDPE contents. In designing the bag, the desire to increase the LLDPE percentage to improve shrink performance is tempered, however, by the other demands on layers 16 and 18 which are better met by the EVA. Initial improvements in the film, compared to films having straight EVA in layers 16 and 18, are seen in films having as little as 10% LLDPE in layers 16 and 18. Films having 20% to 30% LLDPE show marked improvements. Films having higher percentages of LLDPE have even better shrink performance, but are increasingly more difficult to stabilize in the manufacturing process.

The thickness of each layer of the present films is essentially the same as the corresponding layer in conventional shrink films. By way of example in a typical film used to make the bag of FIGURES 1 and 2, the overall film thickness is 2.25 mils (0.057 mm). Layers 14 and 18 are 0.4 mil (0.01 mm) and layer 16 is 1.45 mils (0.037 mm).

The barrier layer is preferably either Saran or EVOH (or a blend of polymers containing EVOH). Saran is a well known and well accepted barrier material. The use of LLDPE in the outer layers of three layer structures, where Saran is the barrier layer, provides to the user the benefit of up-grading a known packaging material. However, the benefits of using an EVOH or EVOH blend as the barrier material have been thoroughly researched and described. Combining an EVOH blend as the barrier layer 14 with LLDPE-EVA blends in layer 16 and 18 provides a superior film. The EVA and EVOH blends contribute to facilitating manufacturing processability. The LLDPE contributes to strikingly improved shrink performance. The EVOH blend may, in addition, provide superior oxygen barrier.

The fi lms described herein are susceptible to being manufactured according to conventional orientation processes. In the following examples, a few films are described in detail as being manufactured using equipment common to the "double bubble" process. Other films of the invention, iterated in a later tabulation, may be made by this or other conventional processes. Choice of the desired process depends not only on the film composition and structure but also on specific properties desired; and thus these choices on any given film are a matter of engineering selection.

The core layer and outer layers of the film can be plasticated and melt extruded through three separate extruders into a three-layer die and formed into a three layer tubular film on conventional "double bubble" equipment.

For the sealant layer, pellets of Dowlex 2045 LLDPE can be dry blended with pellets of 1060 EVA.

The outer layer can also be formed by dry blending pellets of the respective polymers used.

TABLE 1 shows significant properties of the polymers useable in the film

**TABLE 1**

| Polymer Properties | | | |
|---|---|---|---|
| Polymer | Type of Polymer | Melt Index | % VA Content |
| LD 310.09 | EVA | 2.3 | 9.0 |
| NA 235 | EVA | 0.35 | 4.5 |
| NPE 490 | EVA | 0.5 | 8.0 |
| Plexar (l) | EVA, modified | 1.0 | 4.0 |
| UE 643 | EVA | 9.0 | 20 |
| UE 655 | EVA | 2.0 | 9.0 |
| UE 657 | EVA | 0.5 | 12 |
| 360 | EVA | 2.0 | 25 |
| 1060 | EVA | 0.5 | 7.5 |
| 3120 | EVA | 1.2 | 7.5 |
| 3121 | EVA | 0.5 | 7.5 |
| 3134 | EVA | 8.0 | 12 |
| 3135X | EVA | 0.35 | 12 |
| 3165 | EVA | 0.7 | 18 |
| 3638 | EVA | 0.4 | 7.5 |
| 80232 | EVA | 0.38 | 9.5 |
| llP | LLDPE | 0.7 | -- |
| 2035 | LLDPE | 6.0 | -- |
| 2045 | LLDPE | 1 | -- |

The films can be made into bags by cutting the tubular film into lengths and sealing one end by conventional heat sealing techniques. The resulting bags can be subjected to shrink tests using a specially designed test block insert. The test block insert consists of a rectangular wooden block of a size which approximated to the volume of meat normally placed in bags of the same size as the bags under test. The test block includes on its surface a plurality of holes of uniform cross-section, the holes being nominally 3 inches across and (1/1-2 inches deep - the holes simulating the cavities encountered in some cuts of meat.

After the block is inserted into a given bag, the bag is evacuated and sealed closed. The sealed bag is then passed through a conventional hot water shrink process with water temperature controlled at 204^{o}F. to 206^{o}F (95 to 96^{o}C). After the shrink process, bags are evaluated for bag integrity, looking particularly for holes in or near the cavities. Bags having no holes can be judged as passing the test. Bags having one or more holes can be judged as failing the test.

Thus it is seen that LLDPE may be blended with a large family of EVA polymers. The resulting films are susceptible of stretching by conventional processes, and the films are capable of surviving the stretching process intact.

The invention comprises an oriented 5-layer polymeric structure as shown in FIGURE 3. In this structure, layer 114 typically represents the barrier layer. Layer 118 serves as the exterior, abuse-resistant layer. Layer 120 is the sealant layer. Layers 116 and 122 serve as transition layers, or compatibilizing layers between the layer 114 and the layers 118 and 120. Layers 116 and 122 may also provide, as can any of the layers, certain desirable structural and strength benefiting properties.

In typical structures, like polymeric composition in layers 116 and 122 and also in layers 118 and 120 provide a chemical balance of properties centered physically about barrier layer 114. Thus layers 116 and 122, in their normal functions, may serve as chemical as well as physical bridges to layer 114. Since they are not subjected to the physical and chemical abuses imposed on the sealant layer 120, and the outer layer 118, the composition and thickness of layers 116 and 122 may, in many cases, be selected for their desirable properties somewhat independently of those properties required of the external layers by external abuses imposed directly on them. Thus layers 116 and 122 may be selected with substantial freedom to reinforce the film in functionally weaker areas.

In one structure, layer 114 is Saran, layers 116 and 122 are EVA and layers 118 and 120 are a blend of LLDPE with EVA.

## Claims

1. An oriented multiple layer polymeric film, consisting of a first, barrier layer selected from polyvinyl chloride-polyvinylidene chloride copolymer, ethylene vinyl alcohol copolymer and a polymeric blend containing ethylene vinyl alcohol copolymer, second and third layers each adhered to a respective one of the opposite surfaces of the first layer, and fourth and fifth layers respectively adhered to surfaces of the second and third layers not adhered to the first layer, the fourth and fifth layers each being a blend of linear low density polyethylene (LLDPE) and ethylene vinyl acetate (EVA) and each of the second and third layers being an EVA, the fourth and fifth layers having the same composition and being composed of 10 to less than 20% LLDPE and the balance being EVA; the percentages quoted being by weight.

2. An oriented multiple layer polymeric film, consisting of a first, barrier layer selected from polyvinyl chloride-polyvinylidene chloride copolymer, ethylene vinyl alcohol copolymer and a polymeric blend containing ethylene vinyl alcohol copolymer, second and third layers each adhered to a respective one of the opposite surfaces of the first layer, and fourth and fifth layers respectively adhered to surfaces of the second and third layers not adhered to the first layer, the fourth and fifth layers each being a blend of linear low density polyethylene (LLDPE) and ethylene vinyl acetate (EVA) and each of the second and third layers being an EVA, the fourth and fifth layers having different compositions, one of these layers being composed of 10 to less than 20% LLDPE, the balance being EVA, and the other of these layers being composed of more than 10 up to 90% LLDPE, the balance being EVA; the percentages quoted being by weight.

3. An oriented film according to any of Claims 1 or 2, characterised in that the overall composition of the film comprises 20% to 30% linear low density polyethylene.

4. A shrink bag made from an oriented film according to any of Claims 1 to 3, for example which comprises an extruded tubular article having one end closed by a heat seal and the other end open for filling the bag, said other end being closeable after filling by heat sealing.

## Patentansprüche

1. Orientierte mehrschichtige Polymerfolie aus einer ersten Sperrschicht, die unter Polyvinylchlorid/Polyvinylidenchlorid-Copolymeren, Ethylen/Vinylalkohol-Copolymeren und Ethylen/Vinylalkohol-Copolymere enthaltenden Polymermischungen ausgewählt ist, einer zweiten und dritten Schicht, die sich jeweils auf der der ersten Schicht gegenüberliegenden Oberfläche befinden, und einer vierten und fünften Schicht, die sich jeweils auf der Oberfläche der zweiten und dritten Schicht, die sich nicht auf der ersten Schicht befinden, befinden, wobei die vierte und fünfte Schicht jeweils aus einer Mischung aus linearem niedrigdichten Polyethylen (LLDPE) und Ethylenvinylacetat (EVA) bestehen und wobei die zweite und dritte Schicht jeweils aus EVA bestehen, wobei die vierte und fünfte Schicht dieselbe Zusammensetzung aufweisen und aus 10 bis weniger als 20% LLDPE und zum Rest EVA bestehen, wobei alle Prozentangaben auf das Gewicht bezogen sind.

2. Orientierte mehrschichtige Polymerfolie aus einer ersten Sperrschicht, die unter Polyvinylchlorid/Polyvinylidenchlorid-Copolymeren, Ethylen/Vinylalkohol-Copolymeren und Ethylen/Vinylalkohol-Copolymere enthaltenden Polymermischungen ausgewählt ist, einer zweiten und dritten Schicht, die sich jeweils auf der der ersten Schicht gegenüberliegenden Oberfläche befinden, und einer vierten und fünften Schicht, die sich jeweils auf der Oberfläche der zweiten und dritten Schicht, die sich nicht auf der ersten Schicht befinden, befinden, wobei die vierte und fünfte Schicht jeweils aus einer Mischung aus linearem niedrigdichten Polyethylen (LLDPE) und Ethylenvinylacetat (EVA) bestehen und die zweite und dritte Schicht jeweils aus EVA bestehen, wobei die vierte und fünfte Schicht unterschiedliche Zusammensetzungen aufweisen, nämlich eine der Schichten aus 10 bis weniger als 20% LLDPE und zum Rest EVA besteht und die andere der Schichten aus mehr als 10 bis 90% LLDPE und zum Rest EVA besteht, wobei alle Prozentangaben auf das Gewicht bezogen sind.

3. Orientierte Folie nach einem der Ansprüche 1 oder 2, dadurch gekennzeichnet, daß die Gesamtzusammensetzung der Folie 20 bis 30% lineares niedrigdichtes Polyethylen umfaßt.

4. Schrumpfbeutel aus einer orientierten Folie nach einem der Ansprüche 1 bis 3, der beispielsweise einen extrudierten röhrenförmigen Gegenstand umfaßt, dessen eines Ende durch Wärmeversiegelung verschlossen ist und dessen anderes Ende offen ist, so daß der Beutel befüllt werden kann, wobei das andere Ende nach Füllen durch Wärmeversiegeln verschließbar ist.

## Revendications

1. Pellicule polymère multicouche orientée, constituée d'une première couche, barrière, choisie parmi un copolymère polychlorure de vinyle-polychlorure de vinylidène, un copolymère éthylène-alcool vinylique et un mélange polymère contenant un copolymère éthylène-alcool vinylique, de deuxième et troisième couches adhérant chacune à une surface respective des surfaces opposées de la première couche, et de quatrième et cinquième couches adhérant respectivement aux surfaces des deuxième et troisième couches n'adhérant pas à la première couche, les quatrième et cinquième couches étant chacune un mélange de polyéthylène linéaire de basse densité (LLDPE) et d'éthylène-acétate de vinyle (EVA), et chacune des deuxième et troisième couches étant un EVA, les quatrième et cinquième couches ayant la même composition et étant composées de 10 à moins de 20 % de LLDPE et le reste étant de l'EVA ; les pourcentages donnés étant en poids.

2. Pellicule polymère multicouche orientée, constituée d'une première couche, barrière, choisie parmi un copolymère polychlorure de vinyle-polychlorure de vinylidène, un copolymère éthylène-alcool vinylique et un mélange polymère contenant un copolymère éthylène-alcool vinylique, de deuxième et troisième couches adhérant chacune à une surface respective des surfaces opposées de la première couche, et de quatrième et cinquième couches adhérant respectivement aux surfaces des deuxième et troisième couches n'adhérant pas à la première couche, les quatrième et cinquième couches étant chacune un mélange de polyéthylène linéaire de basse densité (LLDPE) et d'éthylène-acétate de vinyle (EVA), et chacune des deuxième et troisième couches étant un EVA, les quatrième et cinquième couches ayant des compositions différentes, l'une de ces couches étant composée de 10 à moins de 20 % de LLDPE, le reste étant de l'EVA, et l'autre de ces couches étant composée de plus de 10 jusqu'à 90 % de LLDPE, le reste étant de l'EVA ; les pourcentages donnés étant en poids.

3. Pellicule orientée selon l'une quelconque des revendications 1 ou 2, caractérisée en ce que la composition globale de la pellicule comprend 20 % à 30 % de polyéthylène linéaire de basse densité.

4. Sac d'emballage sous pellicule plastique fait à partir d'une pellicule orientée selon l'une quelconque des revendications 1 à 3, qui forme par exemple un article tubulaire extrudé ayant une extrémité fermée par une thermosoudure et l'autre extrémité ouverte pour remplir le sac, ladite autre extrémité pouvant être close par thermosoudure après remplissage.
